# EUROPÄISCHE PATENTANMELDUNG

(11) **EP 4 385 713 A1**
(43) Veröffentlichungstag der Anmeldung: **19.06.2024**
(21) Anmeldenummer: 23214940.1
(22) Anmeldetag: 07.12.2023
(51) Int. Cl.: B29C 65/18, B29C 65/78, B29C 65/00

(54) **SIEGELSTATION UND VERFAHREN ZUM SIEGELN EINER VERPACKUNG**

(30) Priorität: 16.12.2022 DE 102022133722
(71) Anmelder: MULTIVAC Sepp Haggenmüller SE & Co. KG, 87787 Wolfertschwenden (DE)
(72) Erfinder: FRÜHSAMMER, Florian, 87437 Kempten (DE); HÄRING, Rainer, 87761 Lauben (DE); BRUNNER, Maximilian, 87784 Westerheim (DE); HIRSCHAUER, Alexander, 88299 Leutkirch (DE); WIEST, Korbinian, 87700 Memmingen (DE)
(74) Vertreter: Grünecker Patent- und Rechtsanwälte PartG mbB

(57) **Zusammenfassung**

Siegelstation zum Siegeln einer Verpackung, insbesondere eines Beutels, die Siegelstation umfassend ein Unterwerkzeug mit einer Unterwerkzeugebene, eine Transporteinrichtung zum Transportieren einer zu siegelnden Verpackung in einer Transportebene, die sich in einem Abstand zu der Unterwerkzeugebene erstreckt, und ein relativ zum Unterwerkzeug bewegbares Oberwerkzeug mit einem ersten Siegelelement zum Siegeln der Verpackung, wobei das Unterwerkzeug ein zweites Siegelelement zum Siegeln der Verpackung umfasst, und wobei das erste Siegelelement und das zweite Siegelelement ausgebildet sind, einen zu siegelnden Teil der Verpackung in einer Siegelebene zu siegeln, wobei die Siegelebene in einem Abstand zu der Unterwerkzeugebene verläuft, der kleiner oder gleich einem Abstand der Transportebene zur Unterwerkzeugebene ist.

## Beschreibung

Die vorliegende Erfindung betrifft eine Siegelstation zum Siegeln einer Verpackung, insbesondere eines Beutels, gemäß unabhängigem Anspruch 1 sowie ein Verfahren zum Siegeln einer Verpackung, insbesondere eines Beutels, entsprechend unabhängigem Anspruch 8.

### Stand der Technik

Siegelstationen und Verfahren zum Siegeln von Verpackungen sind insbesondere aus der Lebensmittelindustrie bekannt. Hierbei können im Wesentlichen zwei unterschiedliche Arten von Siegelstationen unterschieden werden. Zum einen sind Siegelstationen bekannt, die im Wesentlichen für das Siegeln von formstabilen Verpackungen ausgestaltet sind. Hierbei werden bereits ausgeformte (beispielsweise tiefgezogene) Verpackungsmulden mit Produkt, wie Wurst oder Käse, gefüllt. Anschließend wird eine Folie auf die Verpackungsmulden aufgebracht und diese durch Einbringen von Wärme mit der Verpackungsmulde durch selektives Aufschmelzen des Verpackungsmaterials verbunden und die Verpackung so gesiegelt. Andererseits gibt es Siegelstationen, die zum Siegeln von Verpackungen mit nicht fest vorgegebener Form, wie beispielsweise Beutel aus Kunststoff, ausgebildet sind. Hier werden gegenüberliegende Enden der Verpackung im Bereich der Öffnung der Verpackung durch geeignete Siegelelemente zusammengedrückt und durch Wärmeeintrag miteinander verschmolzen, sodass die Öffnung der Verpackung gesiegelt wird.

Dazu umfassen diese Siegelstationen üblicherweise eine Transporteinrichtung, die eine Verpackung in die Siegelstation verbringen kann, in der sie dann mittels eines Siegelelements zwischen einem Oberwerkzeug und einem Unterwerkzeug zumindest teilweise eingeklemmt und gesiegelt wird.

Eine solche Vorrichtung ist beispielsweise aus der DE 10 2010 048 401 B4 bekannt. In der beschriebenen Vorrichtung wird ein Teil der Verpackung zwischen einer Siegelschiene und einer Gegendruckleiste eingeklemmt, sodass ein zuverlässiger Wärmeübertrag an den Teil der Verpackung, der gesiegelt werden soll, gewährleistet wird. Die bekannten Ausführungsformen erfordern jedoch eine erhebliche Siegelhöhe aufgrund der Lage des Teils der zu siegelnden Verpackung relativ zu der Transportebene, in der die Verpackung transportiert wird.

Damit ergeben sich größere Bauhöhen und damit einhergehend ein gesteigerter Materialbedarf für das Unterwerkzeug und/oder das Oberwerkzeug. Dies ist gerade bei flachen Produkten nachteilig. Ferner kann es besonders bei leichten Produkten und/oder Verpackungen zu Fehlstellungen oder Materialverzug der Verpackungen kommen, wenn der zu siegelnde Teil der Verpackung bereits vor dem Siegeln und während des Transports auf einem Siegelelement aufliegt.

### Aufgabe

Ausgehend vom bekannten Stand der Technik besteht die zu lösende technische Aufgabe somit darin, eine Siegelstation zum Siegeln einer Verpackung sowie ein Verfahren zum Siegeln einer Verpackung anzugeben, die eine reduzierte Bauhöhe und/oder geringeren Materialeinsatz für das Siegeln insbesondere flacher Produkte und/oder ein zuverlässiges Siegeln der Verpackung erreichen.

### Lösung

Diese Aufgabe wird erfindungsgemäß durch die Siegelstation zum Siegeln einer Verpackung gemäß unabhängigem Anspruch 1 sowie das Verfahren zum Siegeln einer Verpackung gemäß unabhängigem Anspruch 8 gelöst. Vorteilhafte Weiterbildungen der Erfindung sind in den Unteransprüchen erfasst.

Die erfindungsgemäße Siegelstation zum Siegeln einer Verpackung, insbesondere eines Beutels, umfasst ein Unterwerkzeug mit einer Unterwerkzeugebene, eine Transporteinrichtung zum Transportieren einer zu siegelnden Verpackung in einer Transportebene, die sich in einem Abstand zu der Unterwerkzeugebene erstreckt, und ein relativ zum Unterwerkzeug bewegbares Oberwerkzeug mit einem ersten Siegelelement zum Siegeln der Verpackung, wobei das Unterwerkzeug ein zweites Siegelelement umfasst, und wobei das zweite Siegelelement und das erste Siegelelement ausgebildet sind, einen zu siegelnden Teil der Verpackung in einer Siegelebene zu siegeln, wobei die Siegelebene in einem Abstand zu der Unterwerkzeugebene verläuft, der kleiner oder gleich einem Abstand der Transportebene zur Unterwerkzeugebene ist.

Als Transportebene ist erfindungsgemäß die Oberfläche der Transporteinrichtung zu verstehen, auf der die zu siegelnde Verpackung transportiert wird. Die Unterwerkzeugebene ist demgegenüber als eine Ebene zu verstehen, die parallel zur Transportebene, aber gesehen von einer in der Transportebene transportierten Verpackung aus unterhalb der Transportebene verläuft. Insbesondere kann es sich bei der Unterwerkzeugebene um die Oberfläche des Unterwerkzeugs handeln, über der die Transportebene angeordnet ist.

Die Siegelebene ist als die Ebene zu verstehen, in der der Teil der Verpackung zwischen dem ersten Siegelelement und dem zweiten Siegelelement zumindest während des Siegelns positioniert ist.

Bevorzugt handelt es sich bei der Verpackung um eine nicht formstabile Verpackung. Formstabile Verpackungen sind als Verpackungen zu verstehen, die eine bei Normalbedingungen feste Form aufweisen, die sowohl im unbefüllten als auch im befüllten Zustand gleich ist. Eine nicht formstabile Verpackung ist somit als Verpackung zu verstehen, die beispielsweise abhängig von einem eingefüllten Produkt eine andere Form annimmt oder zumindest annehmen kann als im leeren Zustand.

Das erste Siegelelement und das zweite Siegelelement sind grundsätzlich als derart ausgestaltet anzusehen, dass sie so zusammenwirken können, dass eine Verpackung zwischen dem ersten und dem zweiten Siegelelement in der Siegelebene gesiegelt werden kann. Dies kann insbesondere durch Wärmeeintrag realisiert werden. Dabei ist wenigstens eins der Siegelelemente (das erste oder das zweite Siegelelement) als aktives Siegelelement ausgestaltet, das beispielsweise ein Heizelement umfasst, das Wärme an zumindest einen Teil des Siegelelements abgeben kann, das wiederum die Wärme zum Siegeln an einen Teil der Verpackung im Bereich der Siegelebene überträgt. Es können auch das erste und zweite Siegelelement als aktive Siegelelemente ausgebildet sein. Es ist jedoch im Rahmen der Erfindung auch denkbar, dass eines der Siegelelemente als passives Siegelelement (im nachfolgenden auch Gegendruckelement genannt) ausgebildet ist. In dieser Ausführungsform ist das betreffende Siegelelement kein aktives Siegelelement und umfasst insbesondere kein Heizelement oder ein Heizelement ist diesem Siegelelement nicht zugeordnet, sodass es bevorzugt als Gegendruckfläche wirkt, gegen die der zu siegelnde Teil der Verpackung beispielsweise von dem anderen als aktives Siegelelement ausgestalteten Siegelelement gedrückt wird. Dabei kann entweder das erste oder das zweite Siegelelement als aktives Siegelelement ausgestaltet sein und entsprechend das zweite oder erste Siegelelement als passives Siegelelement realisiert werden.

Das Anordnen des ersten Siegelelements und des zweiten Siegelelements derart, dass die Siegelebene in einem Abstand zu einer Unterwerkzeugebene verläuft, der kleiner oder höchstens gleich einem Abstand der Transportebene zur Unterwerkzeugebene ist, gewährleistet ein Siegeln der Verpackung auf einer Höhe, die etwa der Höhe der Transportebene oder weniger entspricht. Hiermit ist ein Siegeln insbesondere flacher Produkte mit geringer Siegelhöhe möglich, was ein zuverlässiges Verschließen der Verpackungen bei gleichzeitig geringer Bauhöhe der Siegelstation erlaubt. Unabhängig (alternativ oder zusätzlich) von der erreichten Bauhöhe kann hierdurch auch bewirkt werden, dass ein Kontakt zwischen Verpackung und Siegelelement während des Transports der Verpackung nicht besteht, sodass ein Verrutschten und/oder ein Materialverzug der Verpackung vor dem Siegeln vermieden werden kann.

Es kann vorgesehen sein, dass das zweite Siegelelement relativ zu der Unterwerkzeugebene beweglich ausgestaltet ist.

Diese Bewegung kann insbesondere entlang einer Richtung senkrecht zur Unterwerkzeugebene erfolgen und kann so beispielsweise als Puffer für die Aufnahme, bzw. das In-Kontakt-Treten des ersten Siegelelements und des zweiten Siegelelements dienen. Hiermit können Fertigungstoleranzen oder aufgrund von Verschleiß auftretende geringfügige Verstellungen des ersten und/oder zweiten Siegelelements kompensiert werden, sodass die Siegelebene immer noch zuverlässig positioniert werden kann.

In einer Weiterbildung dieser Ausführungsform ist vorgesehen, dass das Unterwerkzeug ein Federelement umfasst, das das zweite Siegelelement in eine Ausgangsebene vorspannen kann, wobei der Abstand der Ausgangsebene zur Unterwerkzeugebene größer als der Abstand der Siegelebene zur Unterwerkzeugebene ist.

Mit dieser Ausführungsform wird ein zuverlässiges In-Kontakt-Treten des ersten Siegelelements und des zweiten Siegelelements schon vor Erreichen der Siegelebene und damit einhergehend ein zuverlässiges Überführen des Teils der Verpackung, der in der Siegelebene gesiegelt werden soll, in die Siegelebene gewährleistet.

In einer Ausführungsform ist das zweite Siegelelement in einer Nut des Unterwerkzeugs angeordnet oder in eine Nut des Unterwerkzeugs zum Siegeln der Verpackung verbringbar. Mit dieser Ausführungsform kann die Siegelebene konstruktiv zuverlässig in der gewünschten Position unterhalb der Transportebene angeordnet werden.

Weiterhin kann vorgesehen sein, dass Siegelstation einen Verstellmechanismus zum Einstellen der Lage der Siegelebene relativ zur Unterwerkzeugebene umfasst. Der Verstellmechanismus kann beispielsweise eine Veränderung Lage des ersten Siegelelements und/oder eine Lage des zweiten Siegelelements relativ zum Oberwerkzeug, bzw. relativ zum Unterwerkzeug, bzw. relativ zur Unterwerkzeugebene ermöglichen, sodass die Lage der Siegelebene einstellbar ist.

In einer Ausführungsform besteht das erste Siegelelement oder das zweite Siegelelement aus einem flexiblen Material oder das erste Siegelelement oder das zweite Siegelelement umfasst wenigstens an einer Anlagefläche, mit der der zu siegelnde Teil der Verpackung in Anlage gebracht werden kann, ein flexibles Material.

Das erste Siegelelement oder das zweite Siegelelement, sofern aus einem flexiblem Material bestehend oder ein solches umfassend, dient in dieser Ausführungsform bevorzugt als passives Siegelelement, wie oben bereits beschrieben. Die Anlagefläche befindet sich während des Siegelns bevorzugt in der Siegelebene und dient als Gegenfläche für das jeweils andere Siegelelement, das dann bevorzugt als aktives Siegelelement ausgeführt ist. Mit dieser Ausführungsform wird gewährleistet, dass der zu siegelnde Teil der Verpackung zuverlässig zwischen dem ersten Siegelelement und dem zweiten Siegelelement positioniert wird, ohne dass Spiel besteht, sodass ein zuverlässiges Siegeln gewährleistet wird.

Das erste Siegelelement kann weiterhin relativ zum Oberwerkzeug beweglich angeordnet sein. Auch mit dieser Ausführungsform wird das Siegelergebnis verbessert, da ein zuverlässiges Positionieren des zu siegelnden Teils der Verpackung in der Siegelebene ermöglicht wird.

Erfindungsgemäß wird weiterhin ein Verfahren zum Siegeln einer Verpackung, insbesondere eines Beutels, mit einer Siegelstation angegeben, die Siegelstation umfassend ein Unterwerkzeug mit einer Unterwerkzeugebene, eine Transporteinrichtung zum Transportieren einer zu siegelnden Verpackung in einer Transportebene, die sich in einem Abstand zu der Unterwerkzeugebene erstreckt, und ein relativ zum Unterwerkzeug bewegbares Oberwerkzeug mit einem ersten Siegelelement zum Siegeln der Verpackung, wobei das Unterwerkzeug ein zweite Siegelelement zum Siegeln der Verpackung umfasst, und wobei das zweite Siegelelement und das erste Siegelelement einen zu siegelnden Teil der Verpackung in einer Siegelebene zu siegeln, wobei die Siegelebene in einem Abstand zu der Unterwerkzeugebene verläuft, der kleiner oder gleich einem Abstand der Transportebene zur Unterwerkzeugebene ist, das Verfahren umfassend ein Transportieren einer zu siegelnden Verpackung mittels der Transporteinrichtung und ein Siegeln des Teils der Verpackung in der Siegelebene zwischen dem ersten Siegelelement und dem zweiten Siegelelement.

Mit dem erfindungsgemäßen Verfahren wird eine geringe Bauhöhe und ein reduzierter Materialeinsatz für das Siegeln von insbesondere flachen Produkten erreicht.

In einer Ausführungsform ist vorgesehen, dass das zweite Siegelelement relativ zu der Unterwerkzeugebene beweglich ausgestaltet ist. Mit dieser Ausführungsform wird die Position der Siegelebene einstellbar und ein zuverlässiges relatives Positionieren des ersten Siegelelements und des zweiten Siegelelements zueinander während des Siegelns des Teils der Verpackung in der Siegelebene gewährleistet.

In einer Weiterbildung dieser Ausführungsform umfasst das Unterwerkzeug ein Federelement umfasst, das das zweite Siegelelement in eine Ausgangsebene vorspannt, wobei der Abstand der Ausgangsebene zur Unterwerkzeugebene größer als der Abstand der Siegelebene zur Unterwerkzeugebene ist. Durch das Vorspannen in die Ausgangsebene wird ein zuverlässiges Positionieren des zu siegelnden Teils der Verpackung zwischen dem ersten und zweiten Siegelelement gewährleistet.

Weiterhin kann das zweite Siegelelement in einer Nut des Unterwerkzeugs angeordnet sein oder während des Siegelns in eine Nut des Unterwerkzeugs verbracht werden. Hierdurch kann die notwendige Bauhöhe des Unterwerkzeugs und/oder des Oberwerkzeugs sowie der Siegelstation insgesamt verringert werden.

Es kann auch vorgesehen sein, dass die Siegelstation einen Verstellmechanismus zum Einstellen der Lage der Siegelebene relativ zur Unterwerkzeugebene umfasst. Hiermit kann bei geringer Bauhöhe der Siegelstation ein zuverlässiges Siegeln auch unterschiedlich hoher Verpackungen erreicht werden.

Das erste Siegelelement oder das zweite Siegelelement kann aus einem flexiblen Material bestehen oder wenigstens an einer Anlagefläche, mit der der zu siegelnde Teil der Verpackung in Anlage gebracht wird, ein flexibles Material umfassen. Mit dieser Ausgestaltung wird die Zuverlässigkeit beim Positionieren des zu siegelnden Teils der Verpackung in der Siegelebene zwischen dem ersten und dem zweiten Siegelelement verbessert.

Es kann auch vorgesehen sein, dass das erste Siegelelement relativ zum Oberwerkzeug beweglich angeordnet ist. Hierdurch kann unterschiedlich hohen Produkten bzw. Verpackungen trotz geringer Bauhöhe der Siegelstation Rechnung getragen werden.

In jeder der bisher beschriebenen Ausführungsformen der Siegelstation oder des Verfahrens kann ferner vorgesehen sein, dass die Unterwerkzeugebene parallel zur Transportebene verläuft und auf der der Transportebene gegenüberliegende Seite der Transporteinrichtung in einem Abstand zur Transportebene verläuft. Bevorzugt kann sich die Unterwerkzeugebene auch in einem Abstand zur Transportebene erstrecken, der größer ist als die größte Ausdehnung des zweiten Siegelelements gemessen in einer Richtung von der Transportebene zur Unterwerkzeugebene.

### Kurze Beschreibung der Figuren

- Figur 1: zeigt eine perspektivische Ansicht einer Siegelstation gemäß einer Ausführungsform
- Figur 2: zeigt eine Ausführungsform des zweiten Siegelelements im Unterwerkzeug
- Figuren 3a+3b: zeigen weitere Ausführungsformen des ersten und zweiten Siegelelements
- Figuren 4a+4b: zeigen weitere Ausführungsformen des ersten und zweiten Siegelelements

### Ausführliche Beschreibung

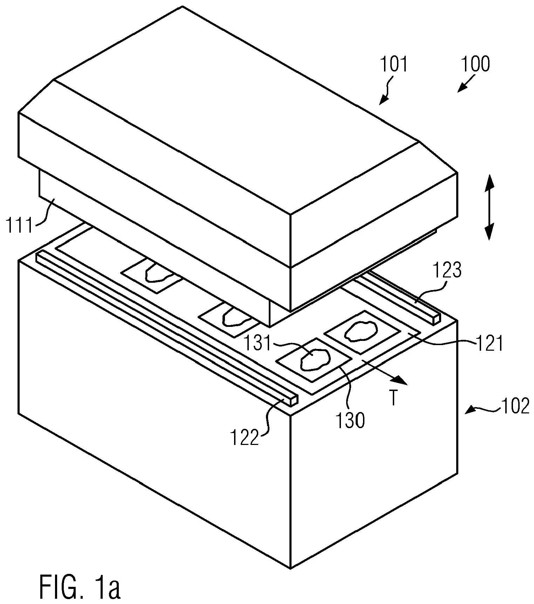

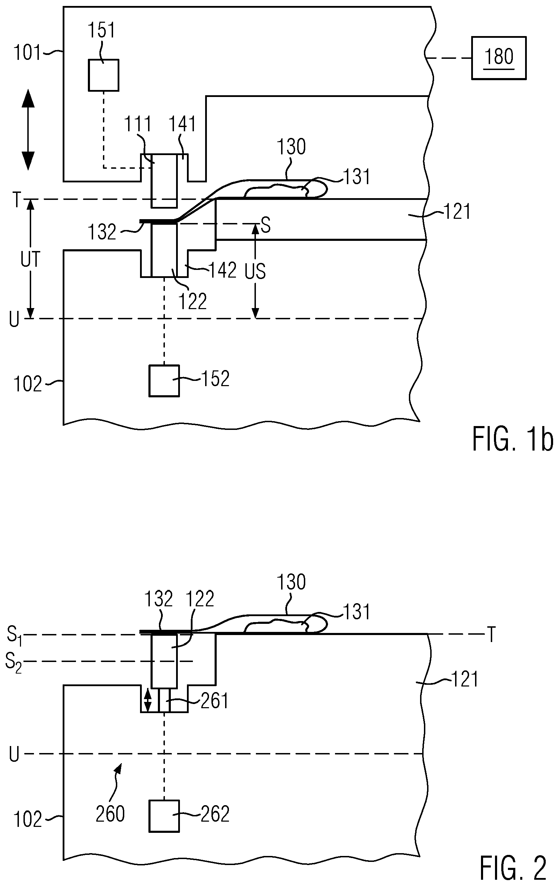

Figur 1 zeigt eine Siegelstation 100 gemäß einer Ausführungsform der Erfindung. In der Figur 1a ist eine perspektivische Ansicht der Siegelstation 100 gezeigt. Die Siegelstation 100 umfasst ein Oberwerkzeug 101 und ein Unterwerkzeug 102, die grundsätzlich hinsichtlich ihrer Ausgestaltung und Funktion aus dem Stand der Technik bekannt sind. Das Unterwerkzeug 102 und das Oberwerkzeug 101 sind so ausgestaltet, dass sie relativ zueinander bewegbar sind. Ohne Beschränkung der Allgemeinheit kann davon ausgegangen werden, dass das Unterwerkzeug 102 feststeht und das Oberwerkzeug 101 auf das Unterwerkzeug zu und von diesem weg bewegt werden kann. Die Erfindung ist diesbezüglich jedoch nicht beschränkt und es kann auch vorgesehen sein, dass das Oberwerkzeug 101 feststehend ausgebildet ist und das Unterwerkzeug 102 relativ zum Oberwerkzeug 101 bewegbar ist. Weiterhin kann alternativ vorgesehen sein, dass sowohl das Oberwerkzeug 101 als auch das Unterwerkzeug 102 aufeinander zu und voneinander weg beweglich angeordnet sind.

Gemäß der hier dargestellten Ausführungsform umfasst das Unterwerkzeug 102 eine Transporteinrichtung 121 zum Transportieren wenigstens einer zu siegelnden Verpackung 130 mit darin ggf. eingelegtem Produkt 131 (wie beispielsweise Wurstscheiben oder Käsescheiben oder Fisch) in einer in Figur 1b genauer beschriebenen Transportebene. Die Transporteinrichtung 121 kann beispielsweise als Transportband mit einem Endlosförderband, bestehend beispielsweise aus oder umfassend Gummi oder ein anderes flexibles Material oder eine Endloskette, ausgestaltet sein.

In dieser Transporteinrichtung 121 kann zumindest eine Verpackung 130 mit darin angeordnetem Produkt transportiert werden, wobei es sich bei der Verpackung vorzugsweise um einen Beutel oder ähnliche nicht formstabile Verpackung handelt. Die Verpackungen können insbesondere aus Kunststoff bestehen oder diesen umfassen. In sie kann beispielsweise Lebensmittel in Form von Stücken oder Scheiben eingefüllt werden, bzw. worden sein, bevor diese Verpackungen 130 mit dem darin angeordneten Produkt 131 der Siegelstation 100 zugeführt werden. In einer bevorzugten Ausführungsform kann vorgesehen sein, dass in der Transporteinrichtung 121 Verpackungen 130 zweireihig transportiert werden können. Die Reihen von Verpackungen 130 können durch ein Begrenzungselement, das als Teil der Transporteinrichtung vorgesehen sein kann (beispielsweise eine Erhebung in der Mitte des umlaufenden Transportbandes), voneinander getrennt werden.

Weiterhin umfasst das Unterwerkzeug 102 erfindungsgemäß wenigstens ein zweites Siegelelement 122, das außerhalb, aber benachbart zu der Transporteinrichtung angeordnet ist. Wie in Bezug auf Figur 1b noch beschrieben wird, kann auf diesem zweiten Siegelelement 122 ein Teil der zu siegelnden Verpackung 130 aufgelegt werden.

Das Oberwerkzeug 101 umfasst zumindest ein erstes Siegelelement 111, das durch Bewegen des Oberwerkzeugs und des Unterwerkzeugs relativ zueinander so relativ zu dem zweiten Siegelelement 122 positioniert werden kann, dass zwischen dem ersten Siegelelement 111 und dem zweiten Siegelelement 122 ein Teil der zu siegelnden Verpackung 130 in einer Siegelebene positioniert wird und durch Wärmeeintrag wenigstens eines der Siegelelemente gesiegelt werden kann.

Ist die Siegelstation 100 zum wenigstens zweireihigen Transport von Verpackungen ausgebildet, so befinden sich auf gegenüberliegenden Seiten der Transporteinrichtung 121 sowohl im Unterwerkzeug 102 als auch im Oberwerkzeug 101 jeweils ein erstes, bzw. zweites Siegelelement 111, 122, sodass die zwei Reihen von Verpackungen 130 gesiegelt werden können.

Die Transporteinrichtung 121 kann bevorzugt getaktet betrieben werden, sodass während des Siegelns ein Transport der Verpackungen 130 in der Siegelstation 100 nicht stattfindet und vor, bzw. nach dem Siegeln ein Weitertransport der Verpackungen erfolgt.

Während in der in Figur 1 dargestellten Ausführungsform und auch in den übrigen Ausführungsformen sowohl für das Unterwerkzeug 102 als auch das Oberwerkzeug 101 auf jeder Seite der Transporteinrichtung jeweils genau ein erstes, bzw. zweites Siegelelement 111, 122 gezeigt ist, kann auch vorgesehen sein, dass auf jeder Seite der Transporteinrichtung eine Vielzahl erster Siegelelemente 111 und zweiter Siegelelemente 122 vorgesehen ist. So kann vorgesehen sein, dass die Siegelelemente derart positioniert sind, dass sie mit einem Teil einer zu siegelnden Verpackung 130, die in der Transporteinrichtung 121 transportiert wird, bei Anhalten der Transporteinrichtung zum Siegeln der Verpackungen 130 zusammenfallen. Hierdurch kann die Materialmenge der ersten, bzw. zweiten Siegelelemente reduziert und an die Erfordernisse angepasst werden.

Dies kann gleichsam eine Energieersparnis mit sich bringen, da beim Erwärmen des ersten, bzw. zweiten Siegelelements 111, 122 zum Siegeln einer Verpackung 130 aufgrund von Wärmefluss innerhalb des Siegelelements auch Bereiche des Siegelelements erwärmt werden könnten, die für das Siegeln nicht notwendig sind.

Figur 1b zeigt einen Querschnitt durch die in Figur 1a gezeigte Siegelstation in einer Ebene senkrecht zur Transportrichtung T der Verpackungen 130 in der Transporteinrichtung 121 entsprechend Figur 1a.

In der Figur 1b sind das Oberwerkzeug 101 und das Unterwerkzeug 102 in einer Situation unmittelbar vor oder bereits während des Siegelns gezeigt. Wie bereits beschrieben, ist jedoch zumindest das Oberwerkzeug 101 oder das Unterwerkzeug 102 relativ zu dem jeweils anderen Werkzeug entlang der gezeigten Doppelpfeilrichtung beweglich ausgestaltet, sodass die in Figur 1b gezeigte Situation nicht beschränkend zu verstehen ist.

In der in Figur 1b gezeigten Darstellung ist zu erkennen, dass die Verpackung 130 mit dem darin angeordneten Produkt 131 im Wesentlichen in der Transporteinrichtung 122, bzw. auf dieser in einer Transportebene T angeordnet ist. Ein Teil 132 der Verpackung 130, der von dem ersten Siegelelement 111 und dem zweiten Siegelelement 122 zu siegeln ist, erstreckt sich über den Bereich der Transporteinrichtung 121 hinaus in einen sich zwischen dem ersten Siegelelement 111 und dem zweiten Siegelelement 122 erstreckenden Bereich. Werden die Siegelelemente aufeinander mit dem dazwischen befindlichen Teil 132 der Verpackung 130 in Anlage gebracht, so kann durch Heizen wenigstens eines der Siegelelemente ein Siegeln der Verpackung bewirkt werden.

In der hier gezeigten Ausführungsform ist das Siegelelement 111 als aktives Siegelelement ausgestaltet, sodass diesem Siegelelement 111 eine Heizeinrichtung 151 zugeordnet ist. Diese kann beispielsweise als eine innerhalb des ersten Siegelelements 111 angeordnete Heizwendel oder andere Heizeinrichtung, die auch extern zu dem Siegelelement 111 angeordnet sein kann, ausgebildet sein. Entsprechende Ausgestaltungen sind aus dem Stand der Technik bekannt.

Alternativ hierzu oder zusätzlich kann auch das zweite Siegelelement 122, das im Unterwerkzeug 102 angeordnet ist, als aktives Siegelelement ausgestaltet sein. Diesem kann dann ein entsprechendes Heizelement 152 zugeordnet sein, das ein Erwärmen des zweiten Siegelelements 122 durchführen kann.

Diese Ausführungsform ist jedoch nicht beschränkend zu verstehen und es ist von der Erfindung ebenfalls umfasst, dass nur eines der Siegelelemente (entweder das erste Siegelelement 111 oder das zweite Siegelelement 122) beheizbar ist. Das andere Siegelelement kann in diesen Ausführungsformen als passives Siegelelement, bzw. als Gegendruckelement ausgestaltet sein.

Erfindungsgemäß ist vorgesehen, dass die Siegelebene S, in der der Teil 132 der Verpackung zwischen dem ersten Siegelelement 111 und dem zweiten Siegelelement 122 positioniert wird und in der ein Siegeln des Teils 132 der Verpackung erfolgt, aus Sicht der Verpackung 130 unterhalb der Transportebene T angeordnet ist.

Allgemeiner formuliert befindet sich die Siegelebene S, in der der Teil 132 der Verpackung 130 zwischen dem ersten Siegelelement 111 und dem zweiten Siegelelement 122 gesiegelt wird, zwischen der Transportebene T und einer Unterwerkzeugebene U, die parallel zur Transportebene T, aber in einem Abstand zur Transportebene T verläuft. Dabei ist erfindungsgemäß der Abstand Us der Siegelebene S zur Unterwerkzeugebene U kleiner oder höchstens gleich dem Abstand U_{T} der Transportebene T zur Unterwerkzeugebene U.

Für den Fall, dass der Abstand Us kleiner als der Abstand U_{T} ist, findet ein Siegeln des Teils 132 der Verpackung 130 in einem Bereich statt, der gesehen von der Verpackung 130 aus unterhalb der Transportebene T liegt. Ist der Abstand Us gleich dem Abstand U_{T}, erfolgt das Siegeln der Verpackung 130 in der Transportebene T, d.h. also der Ebene, in der die Verpackungen 130 transportiert werden.

Hierdurch wird der Siegelpunkt der Verpackung in der Siegelstation in einem Bereich realisiert, der höchstens genauso hoch wie die Transportebene T liegt. Damit kann die gesamte Bauhöhe, insbesondere des Unterwerkzeugs 102 reduziert werden, was zu einer Materialersparnis führt, aber gleichzeitig ein zuverlässiges Siegeln der Verpackungen 130 auch bei niedrigen Verpackungen gewährleistet werden.

Um dies zu erreichen, kann vorgesehen sein, dass zumindest das zweite Siegelelement 122 in einer Nut oder Vertiefung 142 in dem Unterwerkzeug 102 angeordnet ist. Das Siegelelement 122 ist in dieser Ausführungsform in das Unterwerkzeug 102 hineinversetzt, sodass die Siegelebene S, die im Wesentlichen durch die dem Teil 132 der Verpackung zugewandten Oberfläche des zweiten Siegelelements 122 gegeben ist, ebenfalls verglichen mit der Transportebene T nach unten (in Richtung der Unterwerkzeugebene U) verlegt wird.

Analog kann auch zusätzlich das erste Siegelelement 111 des Oberwerkzeugs 101 in einer Nut oder Vertiefung 141 angeordnet sein. Auch dies kann zu einer insgesamt reduzierten Bauhöhe beitragen.

Während hier nur die Siegelelemente 111 und 122 des Oberwerkzeugs 101, bzw. des Unterwerkzeugs 102 auf einer Seite der Transporteinrichtung 121 gezeigt sind, gelten entsprechende Ausführungsformen auch für ein etwaig vorgesehenes erstes, bzw. zweites Siegelelement auf der gegenüberliegenden Seite der Transporteinrichtung 121, wie dies in Bezug auf die Figur 1a bereits beschrieben wurde.

Figur 2 zeigt eine weitere Ausführungsform. In der Figur 2 ist lediglich das Unterwerkzeug 102 gezeigt. Die Ausgestaltung des Oberwerkzeugs kann jedoch entsprechend der Ausführungsform der Figur 1b oder analog zu den übrigen beschriebenen Ausführungsformen realisiert sein.

In der hier dargestellten Ausführungsform umfasst das Unterwerkzeug 102 einen Verstellmechanismus 260, zum Verstellen, bzw. Einstellen der Lage der Siegelebene S relativ zur Unterwerkzeugebene U. Der Verstellmechanismus 260 kann ein Antriebselement 262 (beispielsweise in Form eines Stellantriebs) und ein mit dem Antriebselement 262, sowie dem zweiten Siegelelement 122 verbundenes Übertragungselement 261 umfassen. Das Übertragungselement 261 ist hier nur schematisch dargestellt. Das Übertragungselement ist jedoch so ausgestaltet, dass es eine Bewegung des zweiten Siegelelements 122 entlang der dargestellten Doppelpfeilrichtung durch Betätigen des Antriebselements 262 des Verstellmechanismus 260 bewirken kann.

Hierdurch kann die Position des zweiten Siegelelements und insbesondere die Position der dem zu siegelnden Teil 132 der Verpackung 130 zugewandten Oberfläche des zweiten Siegelelements 122, die im Wesentlichen die Siegelebene S definiert, verändert werden. Hierdurch kann die Lage der Siegelebene relativ zur Unterwerkzeugebene U beispielsweise entsprechend den hier dargestellten zwei unterschiedlich angeordneten Siegelebenen S₁ und S₂ eingestellt werden. Diese Einstellung kann beispielsweise abhängig von der Größe oder der Flexibilität des für das Siegeln verfügbaren Teils 132 der Verpackung erfolgen. Ist der Teil 132 der Verpackung 130, der über die Transporteinrichtung 121 hinausragt, klein, sodass ein gegenüber der Transportebene T weit in Richtung der Unterwerkzeugebene U versetzte Siegelebene (beispielsweise die Siegelebene S₂) ein zuverlässiges Siegeln der Verpackung 130 nicht ermöglicht, kann mittels des Verstellmechanismus 260 die Siegelebene beispielsweise näher an die Transportebene T herangeführt werden, sodass die Siegelebene beispielhaft die Lage der hier dargestellten Siegelebene S₁ annimmt. Diese kann beispielsweise auch mit der Transportebene T zusammenfallen.

Steht mehr Material der Verpackung 130, das sich über die Transporteinrichtung 121 hinaus erstreckt, zur Verfügung, so kann die Siegelebene beispielsweise durch Betätigen des Verstellmechanismus in die Position S₂ verstellt werden. Dies erlaubt auch ein Aufbauen einer Spannung in der Verpackung 130, sodass ein zuverlässiges Siegeln der Verpackung ohne Falten in der Verpackung realisiert werden kann.

Analog zur Ausführungsform entsprechend der Figur 1 und insbesondere der Figur 1b kann das zweite Siegelelement 122 zusammen mit dem Verstellmechanismus 260 in einer hier nur schematisch dargestellten Nut angeordnet sein. Damit ist das Einstellen der Position der Siegelebene in einem Bereich, der sich von der Transportebene T nach unten in Richtung der Unterwerkzeugebene U mit einer großen Amplitude möglich. Das Siegelelement 122 kann jedoch auch auf dem Unterwerkzeug 102 angeordnet sein, sofern die Siegelebene zur Unterwerkzeugebene U stets einen kleineren oder höchstens gleich großen Abstand wie die Transportebene T aufweist.

Während hier nur ein Verstellmechanismus 260 für das zweite Siegelelement gezeigt ist, kann zusätzlich oder alternativ auch ein Verstellmechanismus für das erste Siegelelement im Oberwerkzeug (hier nicht gezeigt) vorgesehen sein. Dabei kann entweder nur dem zweiten Siegelelement oder nur dem ersten Siegelelement ein entsprechender Verstellmechanismus zugeordnet sein oder beiden Siegelelementen. Ist beiden Siegelelementen ein entsprechender Verstellmechanismus zugeordnet, so kann vorgesehen sein, dass beispielsweise mittels der in Figur 1b gezeigten Steuereinheit 180 ein Verschieben oder Verstellen der Lage der Siegelebene bzw. des zweiten Siegelelements 122 von einer ersten Lage (beispielsweise S₁) zu einer zweiten Lage (beispielsweise S₂) in eine korrespondierende Veränderung der Lage des ersten Siegelelements 111 im Oberwerkzeug 101 übersetzt wird, sodass das erste Siegelelement 111 und das zweite Siegelelement 122 zuverlässig in der Siegelebene miteinander und mit dem dazwischen angeordneten Teil 132 der Verpackung 130 in Anlage gebracht werden. Hiermit wird ein zuverlässiges Siegeln der Verpackung gewährleistet.

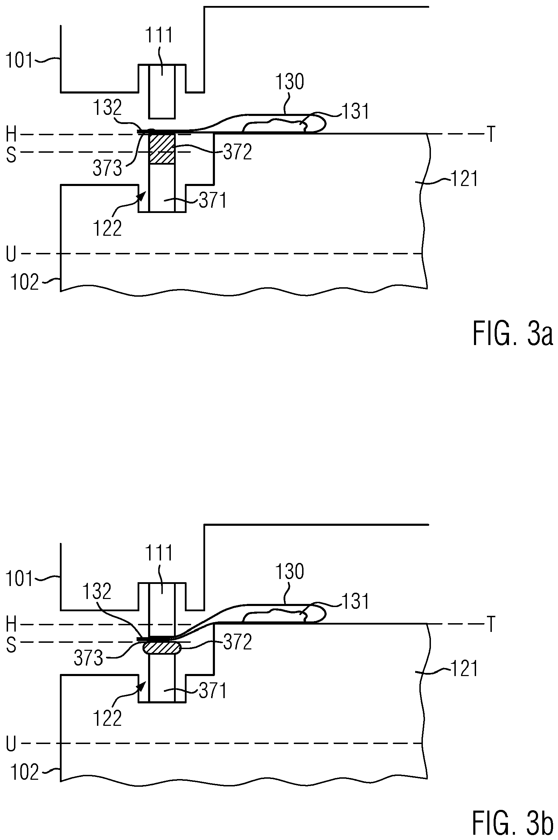

Die Figuren 3a und 3b zeigen eine weitere Ausführungsform, in der das zweite Siegelelement 122 aus flexiblem Material 372 (beispielsweise Gummi oder PU-Schaum oder ähnliche Materialien) besteht oder ein solches flexibles Material 372 umfasst. In letzterem Fall kann das zweite Siegelelement 122 das flexible Material 372 als Teil der dem zu siegelnden Teil 132 der Verpackung zugewandten Oberfläche umfassen. Ein formstabiler Teil 371 des Siegelelements 122 kann sich dann in Richtung des Unterwerkzeugs 102 erstrecken und das flexible Material mit dem Unterwerkzeug 102 verbinden.

In Figur 3a ist eine Situation vor dem Siegeln der Verpackung 130 gezeigt. In der hier gezeigten Ausführungsform erstreckt sich das zweite Siegelelement 122 mit dem flexiblen Material 372 in Richtung des zu siegelnden Teils 132 der Verpackung und eine Anlagefläche des Siegelelements 122, die aus flexiblem Material 372 besteht oder dieses umfasst, erstreckt sich in einer Ebene H, die von der Unterwerkzeugebene U einen Abstand aufweist, der größer ist als der Abstand der Siegelebene S, in der der Teil 132 der Verpackung gesiegelt werden soll. Die Ebene H kann einen Abstand zur Unterwerkzeugebene U aufweisen, der kleiner oder größer als der oder gleich dem Abstand der Transportebene T zur Unterwerkzeugebene ist.

In Figur 3b ist eine Situation gezeigt, in der das Oberwerkzeug 101 in Richtung des Unterwerkzeugs 102 bewegt wurde, sodass der zu siegelnde Teil 132 der Verpackung 130 zwischen dem ersten Siegelelement 111 und dem zweiten Siegelelement 122 zum Siegeln in Anlage gebracht wurde.

Dabei wird das Oberwerkzeug 101 in dieser Ausführungsform derart bewegt, dass das flexible Material 372 des Siegelelements 122 derart deformiert wird, dass die Anlagefläche 373 des zweiten Siegelelements 122, mit der das Siegelelement den zu siegelnden Teil 132 der Verpackung 130 berührt, mit der Siegelebene S zusammenfällt. Dabei wird das flexible Material 372 komprimiert.

Mit dieser Ausführungsform kann ein zuverlässiges Positionieren des Teils 132 der Verpackung 130 zwischen dem ersten Siegelelement 111 und dem zweiten Siegelelement 122 ohne Schlupf gewährleistet werden.

Zusätzlich oder alternativ kann jedoch auch vorgesehen sein, dass das zweite Siegelelement 122 kein flexibles Material umfasst und dessen Anlagefläche stets mit der Siegelebene S zusammenfällt. In diesem Fall kann das erste Siegelelement 111 ein flexibles Material umfassen und das Oberwerkzeug 101 derart bewegt werden, dass beim In-Kontakt-Treten des ersten Siegelelements 111 und des zweiten Siegelelements 122 mit dazwischen angeordneten Teil 132 der zu siegelnden Verpackung 130 ein Deformieren des flexiblen Materials des ersten Siegelelements 111 bewirkt wird. Auch hierdurch kann ein zuverlässiges Positionieren des zu siegelnden Teils 132 der Verpackung 130 erreicht werden.

Analog zu den bisher beschriebenen Ausführungsformen kann zumindest eines der Siegelelemente 111 und 122 in einer hier erneut schematisch dargestellten Nut angeordnet sein. Sämtliche in Bezug auf die Figur 1 beschriebenen Ausführungsformen gelten diesbezüglich entsprechend auch für die in Figur 3a und 3b gezeigten Ausführungsformen.

Zusätzlich zu dem Vorsehen von flexiblem Material kann in den in Figur 3 beschriebenen Ausführungsformen auch ein Verstellmechanismus entsprechend sämtlichen im Zusammenhang mit der Figur 2 beschriebenen Ausführungsformen vorgesehen sein, um zusätzlich die Lage der Siegelebene flexibel einzustellen.

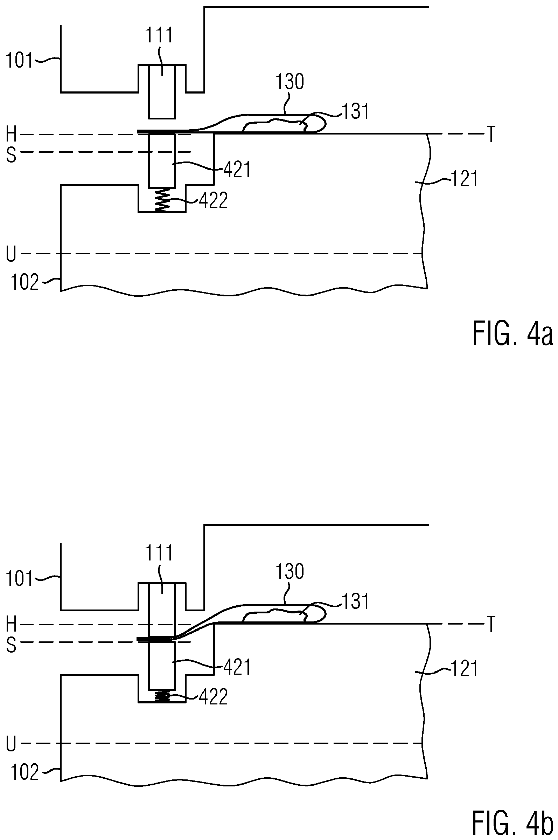

Die Figuren 4a und 4b zeigen eine weitere Ausführungsform der Erfindung.

In dieser Ausführungsform umfasst das Unterwerkzeug 102 ein Federelement 422, das das zweite Siegelelement 421 in eine Ausgangsebene H in Richtung des Oberwerkzeugs 101 vorspannt, deren Abstand zur Unterwerkzeugebene U größer als der Abstand der Siegelebene S zur Unterwerkzeugebene U ist. Das Federelement 422 kann beispielsweise in Form einer Feder oder eines Pneumatikzylinders oder ähnlichem ausgestaltet sein. Erstreckt sich das Siegelelement im Wesentlichen über die gesamte Länge der Siegelstation (siehe beispielsweise Figur 1a), so können in Transportrichtung auch mehrere Federelemente vorgesehen sein, die beispielsweise in einem Abstand von 5 cm oder 10 cm zueinander angeordnet sind und das zweite Siegelelement 122 vorzugsweise auf seiner gesamten Länge in die Ausgangslage entsprechend der Ebene H vorspannen.

Wird nun das Oberwerkzeug 101 in Richtung des Unterwerkzeugs 102 bewegt, so werden das erste Siegelelement 111 und das zweite Siegelelement 421 in Anlage gebracht (mit dem dazwischen angeordneten zu siegelnden Teil 132 der Verpackung 130). Dies geschieht zunächst in der Ausgangslage entsprechend der Ebene H. Bei anschließendem Weiterbewegen des Oberwerkzeugs 101 in Richtung des Unterwerkzeugs 102 wird das Federelement 422 dann gestaucht und das zweite Siegelelement 421 in Richtung der Siegelebene S bewegt, in der das Siegeln des Teils 132 der Verpackung erfolgt.

Durch Einstellen der Vorspannkraft oder der Länge des Federelements 422 kann sowohl die Ausgangslage H relativ zur Transportebene T, bzw. zur Unterwerkzeugebene U, als auch die Lage der Siegelebene S relativ zur Transportebene T, bzw. relativ zur Unterwerkzeugebene U eingestellt werden. Gleichzeitig kann ein zuverlässiges Positionieren des zu siegelnden Teils 132 zwischen dem ersten Siegelelement 111 und dem zweiten Siegelelement 421 bewirkt werden.

Zusätzlich kann das erste Siegelelement 111 und/oder das zweite Siegelelement 421 ein flexibles Material in einem Bereich, der mit dem zu siegelnden Teil 132 der Verpackung 130 in Kontakt kommt, umfassen. Entsprechende Ausführungsformen wurden in Zusammenhang mit der Figur 3 beschrieben und sind ebenfalls sämtlich mit den Ausführungsformen der Figur 4 kombinierbar.

Zusätzlich oder alternativ kann in Verbindung mit den Ausführungsformen der Figur 4 auch ein Verstellmechanismus entsprechend der Ausführungsformen der Figur 2 vorgesehen sein, um zusätzlich zu der Einstellbarkeit des Federelements 422 das zweite Siegelelement 421 in eine bestimmte Ausgangslage H zu positionieren, bzw. die Siegelebene S einzustellen.

Analog zu den Figuren 1a und 1b können sowohl das erste Siegelelement 111 als auch das zweite Siegelelement 421 oder auch nur eines dieser Siegelelemente in einer Nut, die in den Figuren 4a und 4b lediglich schematisch dargestellt ist, angeordnet sein.

## Patentansprüche

1. Siegelstation (100) zum Siegeln einer Verpackung (130), insbesondere eines Beutels, die Siegelstation (100) umfassend ein Unterwerkzeug (102) mit einer Unterwerkzeugebene (U), eine Transporteinrichtung (121) zum Transportieren einer zu siegelnden Verpackung (130) in einer Transportebene (T), die sich in einem Abstand zu der Unterwerkzeugebene (U) erstreckt, und ein relativ zum Unterwerkzeug (102) bewegbares Oberwerkzeug (101) mit einem ersten Siegelelement (111) zum Siegeln der Verpackung (130), wobei das Unterwerkzeug (102) ein zweites Siegelelement (122) zum Siegeln der Verpackung (130)umfasst, und wobei das erste Siegelelement (111) und das zweite Siegelelement (122) ausgebildet sind, einen zu siegelnden Teil (132) der Verpackung (130) in einer Siegelebene (S) zu siegeln, wobei die Siegelebene (S) in einem Abstand (US) zu der Unterwerkzeugebene (U) verläuft, der kleiner oder gleich einem Abstand (UT) der Transportebene (T) zur Unterwerkzeugebene (U) ist.

2. Siegelstation (100) nach Anspruch 1, wobei das zweite Siegelelement (122) relativ zu der Unterwerkzeugebene (U) beweglich ausgestaltet ist.

3. Siegelstation (100) nach Anspruch 2, wobei das Unterwerkzeug (102) ein Federelement (422) umfasst, das das zweite Siegelelement (421) in eine Ausgangsebene (H) vorspannen kann, wobei der Abstand der Ausgangsebene (H) zur Unterwerkzeugebene (U) größer als der Abstand der Siegelebene (S) zur Unterwerkzeugebene (U) ist.

4. Siegelstation (100) nach einem der Ansprüche 1 bis 3, wobei das zweite Siegelelement (122) in einer Nut (142) des Unterwerkzeugs (102) angeordnet oder in eine Nut (142) des Unterwerkzeugs (102) zum Siegeln der Verpackung (130) verbringbar ist.

5. Siegelstation (100) nach einem der Ansprüche 1 bis 4, wobei Siegelstation (100) einen Verstellmechanismus (260) zum Einstellen der Lage der Siegelebene (S) relativ zur Unterwerkzeugebene (U) umfasst.

6. Siegelstation (100) nach einem der Ansprüche 1 bis 5, wobei das erste Siegelelement (111) oder das zweite Siegelelement (122) aus einem flexiblen Material (372) besteht oder wenigstens an einer Anlagefläche (373), mit der der zu siegelnde Teil (132) der Verpackung (130) in Anlage gebracht werden kann, ein flexibles Material (372) umfasst.

7. Siegelstation (100) nach einem der Ansprüche 1 bis 6, wobei das erste Siegelelement (111) relativ zum Oberwerkzeug (101) beweglich angeordnet ist.

8. Verfahren zum Siegeln einer Verpackung (130), insbesondere eines Beutels, mit einer Siegelstation (100), die Siegelstation umfassend ein Unterwerkzeug (102) mit einer Unterwerkzeugebene (U), eine Transporteinrichtung (121) zum Transportieren einer zu siegelnden Verpackung (130) in einer Transportebene (T), die sich in einem Abstand (UT) zu der Unterwerkzeugebene (U) erstreckt, und ein relativ zum Unterwerkzeug (102) bewegbares Oberwerkzeug (101) mit einem ersten Siegelelement (111) zum Siegeln der Verpackung (130), wobei das Unterwerkzeug (102) ein zweite Siegelelement (122) zum Siegeln der Verpackung umfasst, und wobei das zweite Siegelelement (122) und das erste Siegelelement (111) einen zu siegelnden Teil (132) der Verpackung (130) in einer Siegelebene (S) siegeln, wobei die Siegelebene (S) in einem Abstand (US) zu der Unterwerkzeugebene (U) verläuft, der kleiner oder gleich einem Abstand (UT) der Transportebene (T) zur Unterwerkzeugebene (U) ist, das Verfahren umfassend ein Transportieren einer zu siegelnden Verpackung (130) mittels der Transporteinrichtung (121) und ein Siegeln des Teils (132) der Verpackung (130) in der Siegelebene (S) zwischen dem ersten Siegelelement (111) und dem zweiten Siegelelement (122).

9. Verfahren nach Anspruch 8, wobei das zweite Siegelelement (122) relativ zu der Unterwerkzeugebene (U) beweglich ausgestaltet ist.

10. Verfahren nach Anspruch 9, wobei das Unterwerkzeug (102) ein Federelement (422) umfasst, das das zweite Siegelelement (421) in eine Ausgangsebene (H) vorspannt, wobei der Abstand der Ausgangsebene (H) zur Unterwerkzeugebene (U) größer als der Abstand (US) der Siegelebene (S) zur Unterwerkzeugebene (U) ist.

11. Verfahren nach einem der Ansprüche 8 bis 10, wobei das zweite Siegelelement (122) in einer Nut (142) des Unterwerkzeugs (102) angeordnet oder während des Siegelns in eine Nut (142) des Unterwerkzeugs (102) verbracht wird.

12. Verfahren nach einem der Ansprüche 8 bis 11, wobei Siegelstation (100) einen Verstellmechanismus (260) zum Einstellen der Lage der Siegelebene (S) relativ zur Unterwerkzeugebene (U) umfasst.

13. Verfahren nach einem der Ansprüche 8 bis 12, wobei das erste Siegelelement (111) oder das zweite Siegelelement (122) aus einem flexiblen Material (372) besteht oder wenigstens an einer Anlagefläche (373), mit der der zu siegelnde Teil (132) der Verpackung (130) in Anlage gebracht wird, ein flexibles Material (372) umfasst.

14. Verfahren nach einem der Ansprüche 8 bis 13, wobei das erste Siegelelement (111) relativ zum Oberwerkzeug (101) beweglich angeordnet ist.

15. Siegelstation nach einem der Ansprüche 1 bis 7 oder Verfahren nach einem der Ansprüche 8 bis 14, wobei die Unterwerkzeugebene (U) parallel zur Transportebene (T) verläuft und auf der der Transportebene (T) gegenüberliegende Seite der Transporteinrichtung (121) in einem Abstand (UT) zur Transportebene (T) verläuft.
